# EUROPÄISCHE PATENTSCHRIFT

(11) **EP 0 939 675 B1**
(45) Veröffentlichungstag und Bekanntmachung des Hinweises auf die Patenterteilung: **07.11.2001**
(21) Anmeldenummer: 97951952.7
(22) Anmeldetag: 22.11.1997
(51) Int. Cl.: B01L 3/02, G01N 30/60, G01N 30/38

(54) **MIKROMECHANISCHE EJEKTIONSPUMPE ZUM HERAUSTRENNEN KLEINSTER FLUIDVOLUMINA AUS EINEM STRÖMENDEN PROBENFLUID**
MICROMECHANICAL EJECTION PUMP FOR EXTRACTING SMALL FLUID VOLUMES FROM A FLOWING SAMPLE FLUID
POMPE D'EJECTION MICROMECANIQUE POUR SEPARER PAR EXTRACTION DE TRES FAIBLES VOLUMES DE FLUIDE DANS UN FLUIDE D'ECHANTILLONNAGE EN ECOULEMENT

(30) Priorität: 22.11.1996 DE 19648458
(43) Veröffentlichungstag der Anmeldung: 08.09.1999
(73) Patentinhaber: Evotec BioSystems AG, 22525 Hamburg (DE)
(72) Erfinder: HENCO, Karsten, D-40699 Erkrath (DE); HOWITZ, Steffen, D-01309 Dresden (DE); WEGENER, Thomas, D-16816 Neuruppin (DE); GÜNTHER, Rolf, D-22769 Hamburg (DE)
(74) Vertreter: Hilleringmann, Jochen, Dipl.-Ing.
(86) Internationale Anmeldenummer: EP9706543
(87) Internationale Veröffentlichungsnummer: WO9823376

(56) Entgegenhaltungen:
- EP-A- 0 356 160
- EP-A- 0 538 147
- EP-A- 0 668 500
- WO-A-96/04547
- WO-A-97/01085
- GB-A- 2 306 644
- US-A- 4 024 544
- US-A- 4 614 953
- WALLMAN ET AL.: "a micro-machined flow-through cell ..." TRANSDUCERS 95. EUROSENSORS IX, 25. - 29.Juni 1995, STOCKHOLM, Seiten 303-304, XP002061722 in der Anmeldung erwähnt
- NILSSON ET AL.: "a flow-through microsampling device ..." JOURNAL OF BIOCHEMICAL AND BIOPHYSICAL METHODS, Bd. 27, 1993, Seiten 181-190, XP002061723 in der Anmeldung erwähnt

## Beschreibung

Die Erfindung betrifft eine mikromechanische Ejektionspumpe zum Heraustrennen kleinster Fluidvolumina aus einem strömenden Probenfluid, mittels derer sich unter Entstehung sehr kleiner Totvolumina Probenfraktionen aus einem kontinuierlichen Probenstrom physikalisch abtrennen lassen.

Die Abtrennung kleiner Fluidvolumina aus einem Fluidstrom stellt in vielen Bereichen der chemischen, biologischen und pharmazeutischen Analytik eine relevante Problemstellung dar. So ist es oftmals wünschenswert, Makromoleküle, welche bereits durch ein chromatographisches Verfahren hochauflösend separiert wurden und in einer flüssigen Probe vorliegen, direkt einem Analysesystem wie z. B. einer Gelelektrophorese zuzuführen. Es sind Vorrichtungen beschrieben worden, die eine derartige Fluiddosierung ermöglichen. In Nilsson et al. (Journal of Biochemical and Biophysical Methods 27, 181-190 (1993)) besteht eine derartige Vorrichtung aus einer wassergefüllten Pumpkammer mit montierter Piezokeramik. Vor dem Auslauf der Pumpkammer befindet sich ein Messingblock, durch den eine Stahlkanüle geführt wird. Diese, den Probenstrom führende Stahlkanüle besitzt rechtwinklig zur Strömungsachse zwei Öffnungen, von denen die eine als Ansatz für die Pumpkammer und die andere zum Ausstoß der zu selektierenden Mikrotropfen dient. Um Mischungseffekte zu verhindern, sind der Probenstrom und das Pumpkammerfluid durch eine Teflonmembran geringer Dicke getrennt, über die sich die zur Tropfenbildung benötigte Druckwelle fortpflanzen kann. Die Ankopplung der Probenkammer an die Pumpkammer erfolgt hier über vier Schrauben. Das Volumen der eigentlichen Probenkammer beträgt 5 *µ*l. Das Gesamtvolumen der Vorrichtung wird mit 34 *µ*l angegeben. Diese Vorrichtung ist hinsichtlich der komplizierten Fertigungstechnik und des relativ großen Volumens nachteilig.

Wallman et al. (Proc. Transducer 95, 303-304) beschreiben eine Vorrichtung, in der die Probenkammer durch eine Sandwich-Struktur aufgebaut wird. Hier werden zwei Siliziumwafer, in die 2 mm x 15 mm x 350 *µ*l große Kavitäten geätzt worden sind, unter Ausbildung eines Durchflußkanales miteinander verbunden. Der obere Wafer besitzt jeweils am Ende der Probenkammer ein Loch, um den Zu- und Abfluß der Probenflüssigkeit zu ermöglichen. Zwischen den Löchern ist eine Piezokeramik montiert, welche die Probenejektion durch ein im unteren Wafer gegenüberliegendes Loch mit einem Durchmesser von 60 *µ*m ermöglicht. Das Totvolumen dieser Vorrichtung beträgt ca. 1 *µ*l.

Bei dem in der EP 0 672 834 beschriebenen Mikrofluidmanipulator handelt es sich um eine Vorrichtung mit zwei Funktionseinheiten, einem Mikrotropfenemitter und einer Mikrofluiddiode. Dosierfluidtröpfchen werden mittels eines Mikrotropfenemitters in eine Tröpfchenkammer eingebracht und benetzen dort die Eingangsoberfläche der Mikrofluiddiode, welche die Einkopplung des Fluidmediums in ein Zielfluid ermöglicht. Das Gesamtvolumen des Mikrotropfenemitters und des Zuleitungskanals beträgt ca. 1 *µ*l. Ein weiterer Nachteil dieser Vorrichtung ist es, daß eine Durchmischung der zu dosierenden Flüssigkeit im Mikrotropfenemitter auftreten kann.

Aus US-A-4 024 544 ist eine Fluidkanalkreuzverbindung zum Heraustrennen kleiner Tintenvolumina bekannt.

Das der Erfindung zugrundeliegende technische Problem besteht darin, das Volumen der Dosiervorrichtung zu verringern und eine rückvermischungsfreie Dosierung kleinster Probenfraktionen zu ermöglichen. Das Herstellungsverfahren einer derartig miniaturisierten Vorrichtung sollte einen geringen Montageaufwand aufweisen.

Das der Erfindung zugrundeliegende Problem wird gelöst durch eine Vorrichtung nach Anspruch 1. Die weiteren Ansprüche stellen vorteilhafte Ausführungsformen der erfindungsgemäßen Vorrichtung dar.

Die erfindungsgemäße mikromechanische Ejektionspumpe ist insbesondere in ein Substrat integriert und ist insbesondere durch Spritzgußtechnik oder durch mikromechanische Bearbeitung (z. B. Ätzung in ein ätzbares Substratmaterial) hergestellt. In dem Substrat ist ein Probenfluidkanal ausgebildet, der von einem zweiten Kanal durchkreuzt ist. Durch den Probenfluidkanal strömt das Probenfluid, während durch den Arbeitsfluidkanal Arbeitsfluid geleitet wird, das vorzugsweise inert gegenüber dem Probenfluid ist. Der zweite Kanal weist einen ersten Abschnitt auf, der mit einer ersten Druck-/Saugpumpe verbunden ist und quer in den Probenfluidkanal einmündet. Auf der dieser Einmündungsstelle gegenüberliegenden Seite des Probenfluidkanals beginnt dann der zweite Teil (sogenannter Ausstoßkanal) des zweiten Kanals. Durch diesen Ausstoßkanal hindurch wird diejenige Fraktion des Probenfluids, die sich gerade zwischen den beiden Einmündungsstellen von Arbeitsfluid- und Ausstoßkanal in dem Probenfluidkanal befindet, ausgestoßen, und zwar zusammen mit Arbeitsfluid, welches zum Zwecke des Ausstoßes der Probenfraktion mit Druck durch den Arbeitsfluidkanal hindurchströmt.

Vorzugsweise sind die Querschnittflächen von Arbeitsfluidkanal und Ausstoßkanal sind im wesentlichen gleich, wobei sie insbesondere jeweils zwischen 0,01 mm² und 0,12 mm² liegen. Für das Verhältnis aus der Querschnittsfläche des Probenfluidkanals zur Querschnittsfläche des Arbeitsfluid- bzw. Ausstoßkanals gilt insbesondere, daß dieses Verhältnis zwischen 0,2 und 0,5, insbesondere zwischen 0,3 und 0,4 und vorzugsweise bei 0,35 liegt.

Nachfolgend wird anhand der Figuren ein Ausführungsbeispiel der Erfindung näher erläutert. Im einzelnen zeigen:
- Fig. 1: eine Draufsicht auf ein Substrat mit einem Probenfluidkanal und diesen kreuzenden Arbeitsfluid- und Ausstoßkanälen sowie einer druckbeaufschlagbaren Druckkammer, der über einen Zulaufkanal Arbeitsfluid zugeführt wird,
- Fig. 2: einen Schnitt entlang der Linie II-II der Fig. 1 und
- Fig. 3: eine Draufsicht auf ein mikromechanisch bearbeitetes Substrat für eine alternative Ausgestaltung einer Ejektionspumpe mit einer integrierten Pumpenkammer für das Arbeitsfluid und einer Pumpenkammer für das Probenfluid.

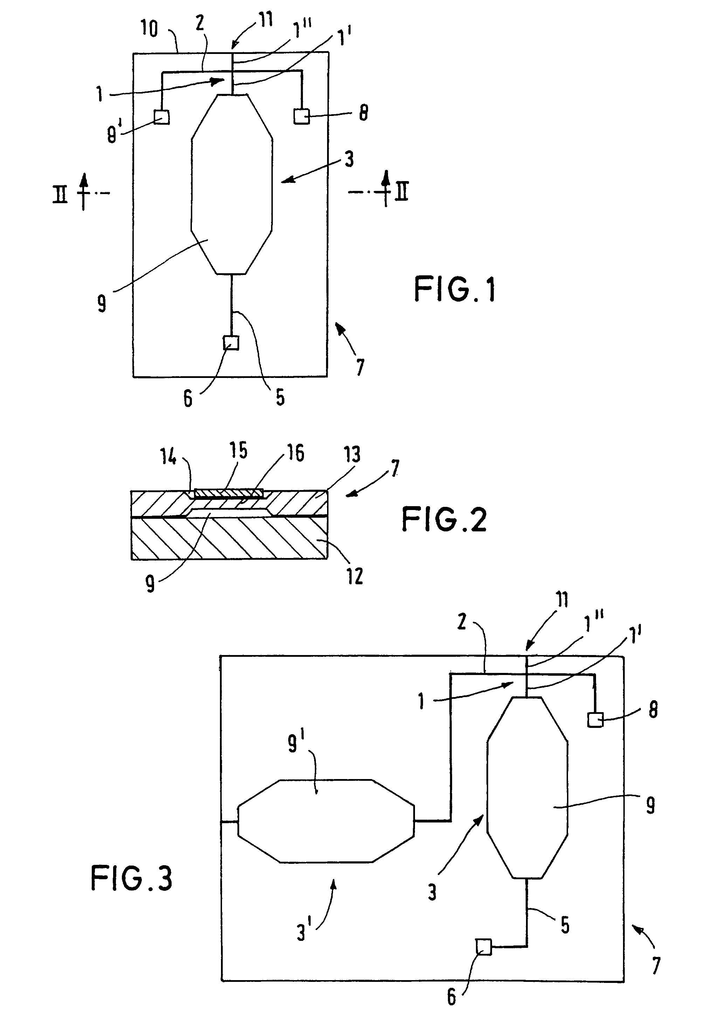

Bei der erfindungsgemäßen Vorrichtung gemäß Fig. 1 wird ein die Probe führender Probenfluidkanal 2 an den Auslaßkanal 1 einer Mikropumpe 3 gekoppelt, wobei der Fluidtransport rechtwinklig zur Ejektionsrichtung der Mikroejektionspumpe erfolgt. Der Auslaßkanal 1 mündet in den Probenfluidkanal 2 unter einem Winkel von im wesentlichen 90° ein und durchkreuzt diesen, um der Einmündungsstelle gegenüberliegend aus dem Probenfluidkanal 2 wieder aus diesen herauszuführen, so daß die Lumen beider Kanäle miteinander verbunden sind. Die Tropfengenerierung mittels der Mikroejektionspumpe kann insbesondere durch zwei unterschiedliche Funktionsprinzipien verwirklicht werden. So ist es möglich, den zur Tropfenejektion benötigten Druckstoß mittels eines Temperatursprunges in einem kleinen Bereich des in der Mikroejektionspumpe befindlichen Arbeitsfluides nach dem sogenannten thermischen oder bubble jet-Prinzip zu verwirklichen. Die Mikroejektionspumpe kann wahlweise auch mittels eines piezoelektrischen Aktuators betrieben werden. Bei Anregung der Mikroejektionspumpe nach dem sogenannten drop-on-demand-Prinzip kommt es zu einer Abgabe eines Gemisches aus vorzugsweise inertem Arbeitsfluid und der abzugebenden Probenfraktion. Der Auslaßkanal ist mit der Druckkammer 9 der Mikropumpe 3 verbunden. Der Druckkammer 9 wird über einen Zulaufkanal 5 Arbeitsfluid aus einem (nicht dargestellten) Vorratsbehältnis zugeführt, das über den Anschluß 6 mit dem Zulaufkanal 5 verbindbar ist.

Durch die Verwendung der erfindungsgemäßen Kanalstrukturen gelingt es, das Volumen der Fluidstruktur im Vergleich zum Stand der Technik entscheidend zu verringern. Ein schnelles Wechseln des Probenfluides und damit ein hoher Probendurchsatz werden ermöglicht. Mit Hilfe der erfindungsgemäßen Vorrichtung besteht somit die Möglichkeit, Fragmente wie z. B. chemische Reagenzien oder auch Zellbestandteile aus einem Probenstrom zu extrahieren. Insbesondere können kleinste, bereits hochaufgelöst vorliegende Probenfraktionen rückmischungsfrei isoliert werden. In vorteilhafter Weise kann aufgrund der direkten Verbindung der Kanalstrukturen miteinander das Arbeitsfluid auch als Spülflüssigkeit verwendet werden.

Gemäß Fig. 1 sind sämtliche Kanalstrukturen sowie die Mikroejektionspumpe in einem Substrat 7 eingearbeitet. Der Probenfluidkanal weist zwei Anschlüsse 8,8' auf, zwischen denen sich der Kanal in dem Substrat 7 erstreckt. Quer zum Probenfluidkanal 2 verläuft der Auslaßkanal 1, der einen ersten Abschnitt 1' und einen zweiten Abschnitt 1" aufweist. Der erste Abschnitt 1' erstreckt sich von der Druckkammer 9 der Mikropumpe 3 bis zum Probenfluidkanal 2. Der zweite Abschnitt 1" verläuft in Verlängerung des ersten Abschnitts 1' vom Probenfluidkanal 2 bis zum Rand 10 des Substrats 7, wo sich die Auslaßöffnung 11 befindet. Der erste Abschnitt 1' des Auslaßkanals 1 wird auch als Arbeitsfluidkanal bezeichnet, da durch diesen Abschnitt das sich in der Druckkammer 9 befindende Arbeitsfluid strömt. Durch den zweiten Kanalabschnitt 1", den sogenannten Ausstoßkanal, gelangt Arbeitsfluid mit samt der auszustoßenden Fraktion des den Probenfluidkanal 2 durchströmenden Probenfluids. Das Arbeitsfluid gelangt über den Zulaufkanal 5 in die Druckkammer 9.

Die erfindungsgemäße Dimensionierung der Mikrostrukturkanäle ermöglicht es, daß bei Druckbeaufschlagung des Arbeitsfluids dieses nicht etwa über den Zulaufkanal 5, sondern über den Auslaßkanal 1 entweicht, und daß bei der anschließenden Entspannung des Arbeitsfluides zu beobachten ist, daß Arbeitsfluid aus dem Vorratsbehälter über den Zulaufkanal 5 in die Kammer der Mikropumpe 3 gelangt und nicht etwa über den mit dem Probenfluidkanal 2 verbundenen Auslaßkanal 1 Arbeitsfluid, gegebenenfalls vermischt mit Probenflüssigkeit, in die Kammer zurückgesaugt wird.

Erfindungsgemäß ist der Auslaßkanal 1 vorzugsweise so zu strukturieren, daß er die folgenden Maße aufweist:
Länge L: 0,6 mm ≤ L ≤ 0,8 mm
Breite B: 0,1 mm ≤ B ≤ 0,15 mm
Tiefe T: 0,1 mm ≤ T ≤ 0,8 mm

Die Länge des Probenfluidkanals 2 kann variabel gestaltet werden und ermöglicht so eine geeignete Kopplung der erfindungsgemäßen Vorrichtung an bestehende Separations- und Analysesysteme. Die Breite B und die Tiefe T des Probenfluidkanals sind vorzugsweise so zu wählen, daß 0,1 mm ≤ B ≤ 0,5 mm und 0,04 mm ≤ T ≤ 0,08 mm gilt.

Ebenso ist die Länge des Zulaufkanals 5 variabel gestaltbar. Die Breite B beträgt zweckmäßigerweise 0,1 ≤ B ≤ 0,3 mm. Der Zulaufkanal weist insbesondere eine Tiefe T auf, für die 0,04 mm ≤ T ≤ 0,08 mm gilt.

In Fig. 2 ist zudem ein Schnitt entlang der Linie II-II durch die Pumpkammer dargestellt. Zu erkennen ist, daß das Substrat 7 aus einem Glassubstrat 12 und einem darauf aufgebrachten Siliziumwafer 13 besteht. In die Unterseite des Siliziumwafer 13 sind Vertiefungen eingeätzt; konkret ist in Fig. 2 die Vertiefung für die Druckkammer 9 dargestellt. Auch in die Oberseite des Siliziumwafer 13 ist eine Vertiefung 14 eingeätzt, in der sich ein Piezoaktuator 15 befindet. Der Siliziumwafer und das Glassubstrat sind dicht miteinander verbunden. Durch das Einbringen der beiden Vertiefungen 9 und 14 entsteht im Siliziumwafer 13 eine Membran 16, die zum Aufbau eines Drucks in der Druckkammer 9 bei Aktivierung des Piezoaktuators 15 sich verschiebt.

In einer bevorzugten Ausführungsform besteht das Substrat aus einem Wafer eines in der Mikroelektronik und/oder Mikromechanik verwendeten Materials (etwa Si, SiO₂, Si₃N₄, GaAs) oder aus Kunststoff. Die Fertigung kann mittels der dem Fachmann bekannten Verfahren, wie z. B. LIGA- oder Spritzgußverfahren, mit äußerst hoher Genauigkeit und Reproduzierbarkeit erfolgen. Die für die Auswertung des Detektionssignals und die Steuerung der Mikroejektionspumpe benötigte Elektronik kann bei dieser Variante in bevorzugter Weise monolithisch in den Wafer integriert werden. Die erfindungsgemäße Vorrichtung kann auch aus einem Glas-Silizium-Schichtaufbau bestehen, wobei der dreidimensional mikrostrukturierte Siliziumkörper mit einer Glasabdeckplatte durch anodisches Bonden atomar verbunden ist.

Der Transport des Probenstroms im Probenfluidkanal 2 kann in dem Fachmann bekannter Weise mit einer konventionellen Pumpe durch Drücken am Einlaßstutzen 8 bzw. Saugen am Auslaßstutzen 8' des Probenfluidkanals 2 erfolgen. Ebenso ist es möglich, den Transport mittels einer weiteren in das Substrat integrierten Mikropumpe 3' erfolgen zu lassen. Diese bevorzugte Ausführungsform ist in Fig. 3 dargestellt, wobei die obigen im Zusammenhang mit den Fign. 1 und 2 beschriebenen Merkmale und Eigenschaften auch bei dem Ausführungsbeispiel gemäß Fig. 3 gegeben sind.

Die Detektion der zu selektierenden Probenfragmente kann mittels eines Sensorelementes, welches sich in Richtung des Probenstroms in geeignetem Abstand vor oder auch direkt im Bereich der Kreuzung des Probenfluidkanals 2 mit dem Auslaßkanal 1 der Mikropumpe 3 befindet, erfolgen. Als besonders vorteilhafte Detektionsmethode ist die Fluoreszenz-Korrelationsspektroskopie gemäß WO-A-94/16313 anzuwenden, welche die funktionale Charakterisierung einzelner Moleküle oder Molekülkomplexe, Viren oder einzelner Zellen erlaubt. Es kann auch ein optisches Analysesystem auf der Basis der Nahfeldspektroskopie gemäß WO-A-96/13744 eingesetzt werden. Die Steuerung der Mikroejektionspumpe bei Detektion eines gewünschten Probenfragmentes kann mittels Steuerungseinheiten, wie sie dem Fachmann bekannt sind, erfolgen.

Die erfindungsgemäße Vorrichtung findet nicht nur Verwendung bei der Separation von zuvor identifizierten Partikeln. Sie kann insbesondere auch als Alternative zu herkömmlichen Dispensiervorrichtungen genutzt werden. In diesem Fall kann es wünschenswert sein, daß das Arbeitsfluid und das Probenfluid identisch sind.

Die Vorrichtung kann als Einzelelement oder als Arraystruktur Bestandteil automatisierter Abtrennsysteme sein. So können insbesondere mehrere. Probenfluidkanäle mit der jeweils zugehörigen Mikroejektionspumpe monolithisch auf einem Wafer integriert sein. Es kann zudem bei bestimmten Anwendungen durchaus wünschenswert sein, die nach dem erfindungsgemäßen Verfahren separierten Probenfragmente mittels einer in EP-A-0 672 834 beschriebenen Mikrofluiddiode in ein Zielfluid einzukoppeln.

Anhand von Fig. 3 soll nachfolgend noch auf eine alternative Ausgestaltung der erfindungsgemäßen Ejektionspumpe eingegangen werden.

In Ergänzung zur Ejektionspumpe gemäß Fig. 1 weist die alternative Ejektionspumpe gemäß Fig. 3 noch eine integrierte Mikropumpe 3' zur Aufrechterhaltung der Strömung des Probenfluids im Probenfluidkanal 2 auf. Diese Mikropumpe 3' weist eine in das Substrat 7 integrierte Druck-/Saugkammer 9' auf, die in den Probenfluidkanal 2 geschaltet ist. Im übrigen gleicht das Ausführungsbeispiel gemäß Fig. 3 demjenigen nach Fig. 1.

Die hier beschriebene und in der Zeichnung dargestellte Mikroejektionspumpe läßt sich insbesondere mit dem Gegenstand der DE-C-195 44 127 kombinieren, wobei die dort erwähnte Multielektrodenanordnung zur Steuerung der Position und/oder der Positionsveränderung suspendierter Partikel des Probenfluids im Probenfluidkanal 2 angeordnet wird. Alternativ läßt sich der Probenfluidkanal 2 zwecks Mikropartikelpositionierung mit Elektrodenanordnungen versehen wie sie in DE-C-196 53 659 und DE-C-196 53 661 beschrieben sind.

## Patentansprüche

1. Mikromechanische Ejektionspumpe zum Heraustrennen kleinster Fluidvolumina aus einem strömenden Probenfluid, mit
- einem Substrat (7),
- einem in dem Substrat (7) ausgebildeten Probenfluidkanal (2) für ein Probenfluid,
**gekennzeichnet durch**
- einen in dem Substrat (7) ausgebildeten Arbeitsfluidkanal (1') für druckbeaufschlagbares Arbeitsfluid,
- einen Zulaufkanal (5), über den dem Arbeitsfluidkanal (1') Arbeitsfluid zuführbar ist,
- einen Ausstoßkanal (1") zum Ausstoßen eines Fluidvolumens aus dem Probenfluid, und
- eine in dem Substrat (7) integrierte und mit dem Arbeitsfluidkanal (1') verbundene erste Pumpe (3) für das Arbeitsfluid, die zwischen dem Arbeitsfluidkanal (1') und dem Zuführkanal (5) angeordnet ist, wobei
- der Arbeitsfluidkanal (1') quer zur Erstreckung des Probenfluidkanals (2) verlaufend in diesen einmündet,
- der mit dem Probenfluidkanal (2) verbundene Ausstoßkanal (1") dem Arbeitsfluidkanal (1') gegenüberliegend von dem Probenfluidkanal (2) abzweigt,
- der Probenfluidkanal (2), der Arbeitsfluidkanal (1') und der Ausstoßkanal (1") miteinander in Fluidverbindung stehen, und
- der Arbeitsfluidkanal (1'), der Ausstoßkanal (1") und der Probenfluidkanal (2) zumindest im Bereich ihrer Fluidverbindung ihre Querschnittsflächen bestimmenden Abmessungen aufweisen, die im Submillimeterbereich, insbesondere im Bereich zwischen ca. 0,9 und 0,01 mm liegen.

2. Mikromechanische Ejektionspumpe nach Anspruch 1, **dadurch gekennzeichnet, daß** das Verhältnis aus dem Querschnitt des Probenfluidkanals (2) zu dem Querschnitt des Arbeitsfluid- bzw. Ausstoßkanals (1',1") zwischen 0,2 und 0,5, insbesondere zwischen 0,3 und 0,4 und vorzugsweise bei 0,35 liegt.

3. Mikromechanische Ejektionspumpe nach Anspruch 1 oder 2, **dadurch gekennzeichnet, daß** der Arbeitsfluidkanal (1') und der Ausstoßkanal (1") im wesentlichen den gleichen Querschnitt zwischen 0,01 mm² bis 0,12 mm² aufweisen.

4. Mikromechanische Ejektionspumpe nach einem der Ansprüche 1 bis 3, **dadurch gekennzeichnet, daß** der Probenfluidkanal (2), der Arbeitsfluidkanal (1') und der Ausstoßkanal (1") im Bereich ihrer Einmündungs- und Abzweigungsbereiche sämtlich geradlinig verlaufen.

5. Mikromechanische Ejektionspumpe nach Anspruch 4, **dadurch gekennzeichnet, daß** sich der Arbeitsfluidkanal (1') und der Ausstoßkanal (1") entlang einer gemeinsamen geradlinigen Längsachse erstrecken, die quer zur Längsachse des Probenfluidkanals (2) verläuft.

6. Mikromechanische Ejektionspumpe nach einem der Ansprüche 1 bis 5, **dadurch gekennzeichnet, daß** die erste Pumpe eine Druckkammer (9) mit einer Membran (16) aufweist, auf die zum Pumpen von Arbeitsfluid durch den Arbeitsfluidkanal (1') ein Piezoaktuator (15) einwirkt.

7. Mikromechanische Ejektionspumpe nach einem der Ansprüche 1 bis 6, **dadurch gekennzeichnet, daß** in das Substrat (7) eine mit dem Probenfluidkanal (2) verbundene zweite Pumpe (3') für das Probenfluid integriert ist.

8. Mikromechanische Ejektionspumpe nach Anspruch 7, **dadurch gekennzeichnet, daß** die zweite Pumpe (3') eine Druckkammer (9') mit einer Membran aufweist, auf die zum Pumpen von Probenfluid durch den Probenfluidkanal (2) ein Piezoaktuator einwirkt.

## Claims

1. Micromechanical ejection pump for separation of small fluid volumes from a flowing sample fluid, the pump comprising:
- a substrate (7),
- a sample fluid duct (2) for a sample fluid formed in the substrate (7),
**characterized by**:
- a working fluid duct (1') for pressurizable working fluid formed in the substrate (7),
- a supply duct (5) via which working fluid can be supplied to the working fluid duct (1'),
- an ejection duct (1") to eject a fluid volume from the sample fluid, and
- a first pump (3) for the working fluid integrated in the substrate (7) and connected with the working fluid duct (1'), said pump (3) being arranged between the working fluid duct (1') and the supply duct (5), wherein
- the working fluid duct (1') extends transversely to the sample fluid duct (2) and joins the sample fluid duct (2),
- the ejection duct (1") is connected with the sample fluid duct (2) and branches off the sample fluid duct (2) opposite the working fluid duct (1'),
- the sample fluid duct (2), the working fluid duct (1') and the ejection duct (1") are in fluid connection with each other, and
- the working fluid duct (1'), the ejection duct (1") and the sample fluid duct (2) have, at least in the area of the fluid connection, dimensions determining their respective cross-sections which lie in the submillimeter range, in particular in the range between approximately 0.9 and 0.01 mm.

2. Micromechanical ejection pump according to claim 1, **characterized in that** the ratio of the cross-section of the sample fluid duct (2) to the cross-section of the working fluid and the ejection duct (1',1") respectively ranges between 0.2 and 0.5, in particular between 0.3 and 0.4, and is preferably 0.35.

3. Micromechanical ejection pump according to claim 1 or 2, **characterized in that** the working fluid duct (1') and the ejection duct (1") have essentially the same cross-section ranging between 0.01 mm² and 0.12 mm².

4. Micromechanical ejection pump according to one of claims 1 to 3, characterized in that the sample fluid duct (2), the working fluid duct (1') and the ejection duct (1") run straight in their junction and branching areas.

5. Micromechanical ejection pump according to claim 4, **characterized in that** the working fluid duct (1') and the ejection duct (1") extend along a common straight longitudinal axis which runs transversely to the longitudinal axis of the sample fluid duct (2).

6. Micromechanical ejection pump according to one of claims 1 to 5, characterized in that the first pump comprises a pressure chamber (9) with a membrane (16) upon which a piezo-actuator (15) acts for the purpose of pumping working fluid through the working fluid duct (1').

7. Micromechanical ejection pump according to one of claims 1 to 6, characterized in that a second pump (3') for the sample fluid connected with the sample fluid duct (2) is integrated in the substrate (7).

8. Micromechanical ejection pump according to claim 7, characerized in that the second pump (3') comprises a pressure chamber (9') with a membrane upon which a piezo-actuator acts for the purpose of pumping sample fluid through the sample fluid duct (2).

## Revendications

1. Pompe d'éjection micromécanique servant à extraire de très petits volumes de fluide à partir d'un fluide échantillon circulant, comportant
- un substrat (7),
- un canal (2) de fluide échantillon, formé dans le substrat (7) et prévu pour un fluide échantillon
**caractérisé par**
- un canal (1') de fluide de travail, formé dans le substrat (7) et prévu pour un fluide de travail pouvant être chargé par une pression,
- un canal d'amenée (5), au moyen duquel du fluide de travail peut être amené au canal (1') de fluide de travail,
- un canal d'éjection (1") pour éjecter un volume de fluide hors du fluide échantillon, et
- une première pompe (3) intégrée dans le substrat (7) et reliée au canal (1') de fluide de travail et prévue pour le fluide de travail, et qui est disposée entre le canal (1') de fluide de travail et le canal d'amenée (5),
- le canal (1') de fluide de travail débouchant dans le canal (2) de fluide échantillon, en s'étendant transversalement par rapport à ce canal,
- le canal d'éjection (1"), qui est relié au canal (2) de fluide échantillon, s'étendant en dérivation à partir du canal (1') de fluide de travail à l'opposé du canal (2) de fluide échantillon,
- le canal (2) de fluide échantillon, le canal (1') de fluide de travail et le canal d'éjection (1") étant reliés entre eux selon une liaison fluidique, et
- le canal (1') de fluide de travail, le canal d'éjection (1") et le canal (2) de fluide échantillon possédant des dimensions, qui, au moins dans la zone de leur liaison fluidique, déterminent leurs surfaces en coupe transversale et se situent dans la gamme inférieure au millimètre et en particulier dans la gamme comprise entre environ 0,9 et 0,01 mm.

2. Pompe d'éjection micromécanique selon la revendication 1, **caractérisée en ce que** le rapport de la section transversale du canal (2) de fluide échantillon à la section transversale du canal de fluide de travail ou du canal d'éjection (1',1") est compris entre 0,2 et 0,5, en particulier entre 0,3 et 0,4, et est de préférence égal à 0,35.

3. Pompe d'éjection micromécanique selon la revendication 1 ou 2, **caractérisée en ce que** le canal (1') de fluide de travail et le canal d'éjection (1") possèdent essentiellement la même surface en coupe transversale entre 0,01 mm² et 0,12 mm².

4. Pompe d'éjection micromécanique selon l'une des revendications 1 à 3, **caractérisée en ce que** le canal (2) de fluide échantillon, le canal (1') de fluide de travail et le canal d'éjection (1") s'étendent tous avec une disposition rectiligne au niveau de leurs zones d'embouchure et de dérivation.

5. Pompe d'éjection micromécanique selon la revendication 4, **caractérisée en ce que** le canal (1') de fluide de travail et le canal d'éjection (1") s'étendent le long d'un axe longitudinal rectiligne commun, qui est transversal à l'axe longitudinal du canal (2) de fluide échantillon.

6. Pompe d'éjection micromécanique selon l'une des revendications 1 à 5, **caractérisée en ce que** la première pompe possède une chambre de pression (9) pourvue d'une membrane (16), sur laquelle un actionneur piézoélectrique (15) agit pour le pompage de fluide de travail par l'intermédiaire du canal (1') de fluide de travail.

7. Pompe d'éjection micromécanique selon l'une des revendications 1 à 6, **caractérisée en ce qu'**une seconde pompe (3') pour le fluide échantillon, qui est reliée au canal (2) de fluide échantillon, est intégrée dans le substrat (7).

8. Pompe d'éjection micromécanique selon la revendication 7, **caractérisée en ce que** la seconde pompe (3') comporte une chambre de pression (9') équipée d'une membrane, sur laquelle un actionneur piézoélectrique agit pour le pompage d'un fluide échantillon par l'intermédiaire du canal (2) de fluide échantillon.
